# EUROPÄISCHE PATENTANMELDUNG

(11) **EP 0 758 719 A2**
(43) Veröffentlichungstag der Anmeldung: **19.02.1997**
(21) Anmeldenummer: 96112408.8
(22) Anmeldetag: 01.08.1996
(51) Int. Cl.: F15B 13/08, F16K 27/00

(54) **Steuerungseinrichtung, insbesondere für Getriebe von Kraftfahrzeugen, sowie Verfahren zur Herstellung einer Steuerungseinrichtung**

(30) Priorität: 11.08.1995 DE 19529550
(71) Anmelder: HYDRAULIK-RING ANTRIEBS- UND STEUERUNGSTECHNIK GmbH, D-72622 Nürtingen (DE)
(72) Erfinder: Trzmiel, Alfred, 72661 Grafenberg (DE)
(74) Vertreter: Kohl, Karl-Heinz

(57) **Zusammenfassung**

Die Steuerungseinrichtung hat eine Steuerungselektronik (24), an die ein Proportionalmagnetventil angeschlossen ist, das einen Magnetteil (8, 9) und einen Ventilteil (35) aufweist. Damit eine einfache, kostengünstige Fertigung der Steuerungseinrichtung möglich ist, ist der Ventilteil (35) in eine Kunststoffmasse (45) eingebettet, die den Magnetteil (8, 9) mit dem Ventilteil (35) zusammenhält. Das in die Kunststoffmasse eingegossene System stellt ein integriertes hydraulisches Ansteuersystem für Getriebe dar. Der Magnetteil (8, 9) und der Ventilteil (35) des Proportionalmagnetventiles werden in den beiden Teilen einer Spritzgußform angeordnet. Durch Zusammenfahren der Spritzgußteile werden der Magnetteil (8, 9) und der Ventilteil (35) zum Proportionalmagnetventil zusammengefügt. Anschließend wird in die Spritzgußform die Kunststoffmasse eingespritzt, die die beiden Teile des Proportionalmagnetventiles miteinander fest verbindet.

## Beschreibung

Die Erfindung betrifft eine Steuerungseinrichtung, insbesondere für Getriebe von Kraftfahrzeugen, nach dem Oberbegriff des Anspruches 1 sowie ein Verfahren zur Herstellung einer solchen Steuerungseinrichtung nach dem Oberbegriff des Anspruches 9.

Solche Steuerungseinrichtungen werden bei Automatikgetrieben von Kraftfahrzeugen eingesetzt und weisen zur Verbesserung des Fahrkomforts Proportionalventile auf. Sie werden in Einzelbauweise eingebaut oder in einen kombinierten Hydraulikblock eingesetzt. Die Proportionalmagnetventile müssen allerdings eine sehr genaue reproduzierbare Kennlinie realisieren, wodurch die Herstellung solcher Steuerungseinrichtungen aufwendig und kostspielig wird.

Der Erfindung liegt die Aufgabe zugrunde, die gattungsgemäße Steuerungseinrichtung sowie das gattungsgemäße Verfahren so auszubilden, daß eine einfache, kostengünstige Fertigung möglich ist.

Diese Aufgabe wird bei der gattungsgemäßen Steuerungseinrichtung erfindungsgemäß mit den kennzeichnenden Merkmalen des Anspruches 1 und beim gattungsgemäßen Verfahren erfindungsgemäß mit den kennzeichnenden Merkmalen des Anspruches 9 gelöst.

Bei der erfindungsgemäßen Steuerungseinrichtung ist der Ventilteil des Proportionalmagnetventiles wenigstens teilweise in die Kunststoffmasse eingebettet, mit der der Magnetteil und der Ventilteil des Proportionalmagnetventiles zusammengehalten werden. Das in die Kunststoffmasse eingegossene System stellt ein integriertes hydraulisches Ansteuersystem für Getriebe, wie Automatikgetriebe oder Schaltgetriebesteuerungen, dar. Die Steuerungseinrichtung läßt sich kostengünstig herstellen, zumal zwischen der Steuerungselektronik und dem hydraulischen Teil keine Kabel und Stecker erforderlich sind. Der Magnetteil und der Ventilteil des Proportionalmagnetventiles werden in den beiden Teilen einer Spritzgußform angeordnet. Durch Zusammenfahren der beiden Spritzgußteile werden der Magnetteil und der Ventilteil zum Proportionalmagnetventil zusammengefügt. Anschließend wird in die Spritzgußform die Kunststoffmasse eingespritzt, welche die beiden Teile des Proportionalmagnetventiles miteinander fest verbindet.

Weitere Merkmale der Erfindung ergeben sich aus den weiteren Ansprüchen, der Beschreibung und den Zeichnungen.

Die Erfindung wird anhand zweier in Zeichnungen dargestellter Ausführungsbeispiele näher erläutert. Es zeigen
- Fig. 1: im Querschnitt eine Spritzgußform, in die Teile einer erfindungsgemäßen Steuerungseinrichtung für Automatikgetriebe von Kraftfahrzeugen eingesetzt sind,
- Fig. 2: in einer Darstellung entsprechend Fig. 1 die Spritzgußform nach dem Einbringen von Kunststoff,

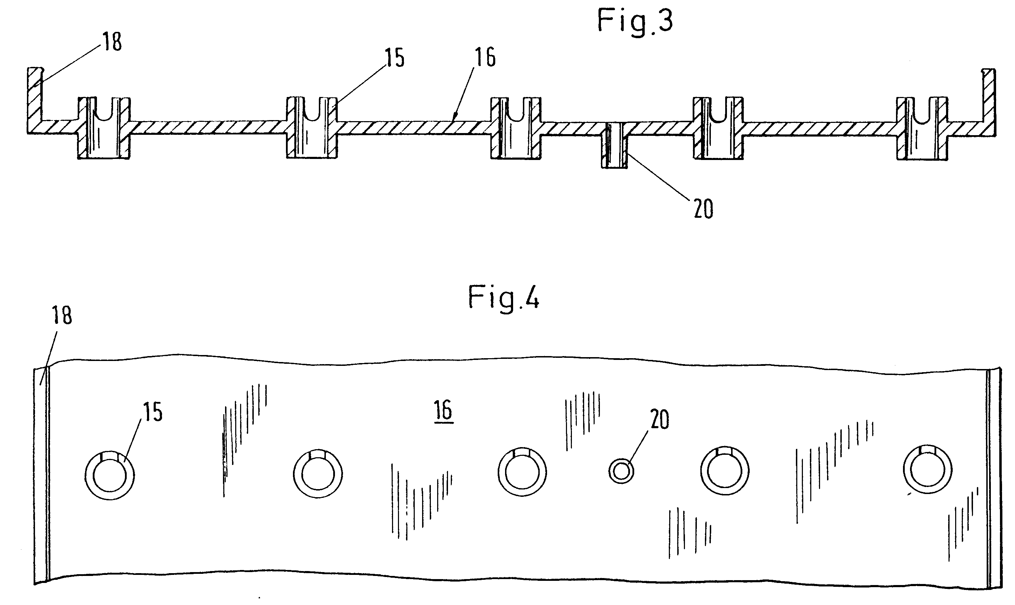

- Fig. 3: im Längsschnitt eine Dichtplatte der erfindungsgemäßen Steuerungseinrichtung,
- Fig. 4: in Draufsicht einen Teil der Dichtplatte gemäß Fig. 3,
- Fig. 5: im Axialschnitt und in vergrößerter Darstellung einen Magnetteil eines Proportionalmagneten der erfindungsgemäßen Steuerungseinrichtung,
- Fig. 6: in vergrößerter Darstellung und im Axialschnitt einen Ventilteil der erfindungsgemäßen Steuerungseinrichtung,
- Fig. 7: eine Draufsicht auf den Ventilteil gemäß Fig. 6,
- Fig. 8 und 9: in Darstellungen entsprechend den Fig. 6 und 7 eine zweite Ausführungsform eines Ventilteils.

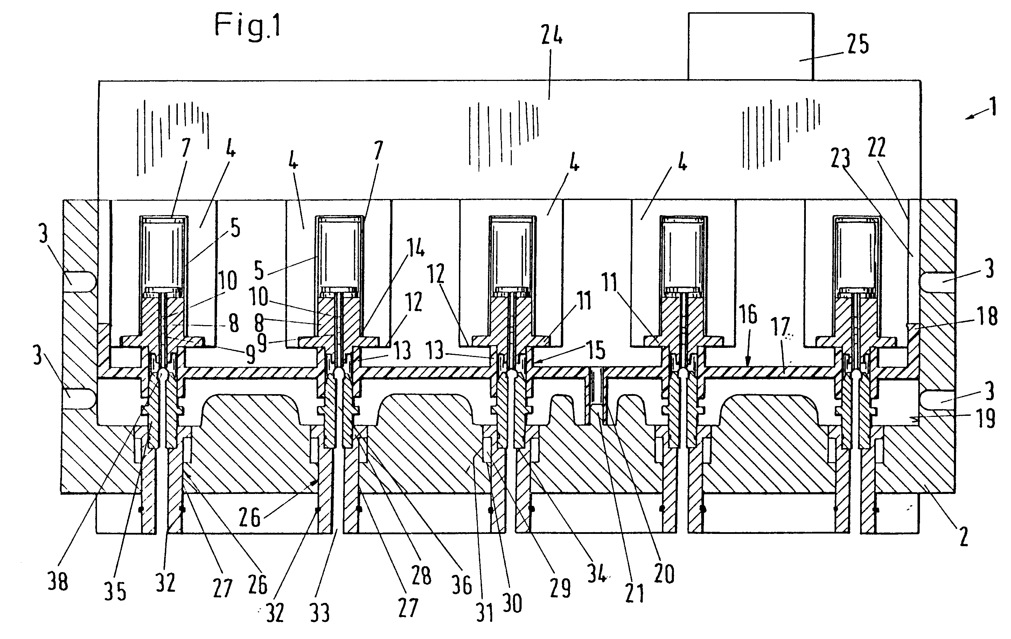

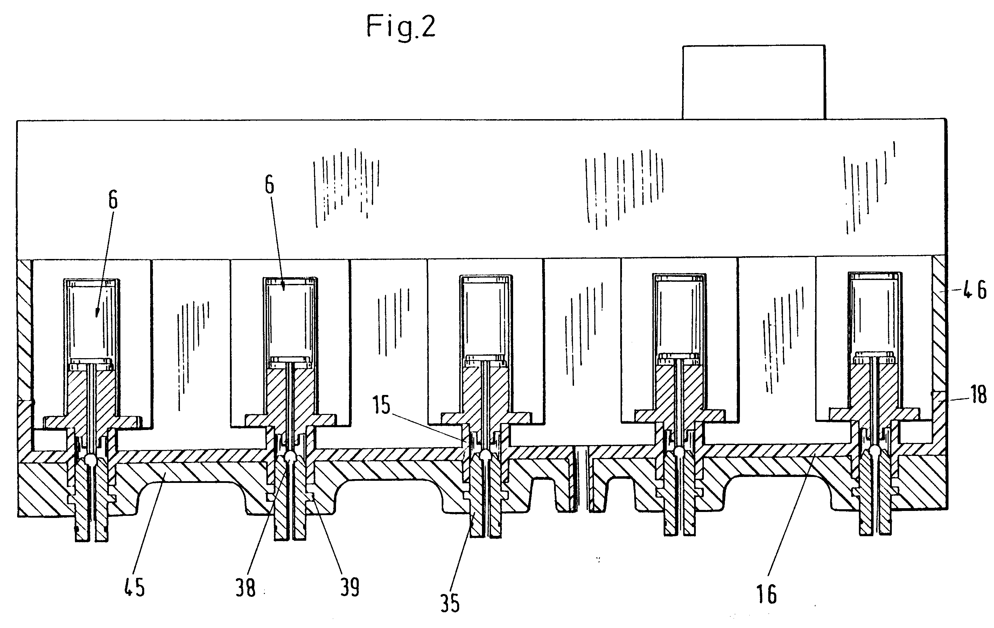

Fig. 1 zeigt im Querschnitt eine Spritzgußform mit einem Oberteil 1 und einem Unterteil 2. Der Unterteil 2 hat Einspritzöffnungen 3, durch welche der Kunststoff beim Spritzvorgang in bekannter Weise eingebracht wird. Der Spritzgußoberteil 1 hat eine Aufnahme für Magnetteile 5 (Anker) von Proportionalmagnetventilen 6 (Fig. 2) und eine Steuerungselektronik 24. Die Magnetteile 5 haben jeweils einen Anschlußkörper 7, der hülsenförmig ausgebildet und nach oben geschlossen ist. In der Spritzgußlage gemäß Fig. 1 ragt von unten in den Anschlußkörper 7 ein Führungskörper 8, der eine zentrale axiale Bohrung 9 aufweist, in der ein Stößel 10 axial verschiebbar gelagert ist. Er ist im Ausführungsbeispiel als Sechskantstößel ausgebildet, kann selbstverständlich jedoch auch jede andere geeignete Querschnittsform haben.

Der Führungskörper 8 liegt mit einem radialen Flansch 11 auf einem Boden 12 von Aufnahmeräumen 4 der Steuerungseinrichtung auf.

In den Boden 12 der Aufnahmen 4 mündet mittig eine Durchgangsöffnung 13, in welche der Führungskörper 8 mit einem über den Flansch 11 ragenden Vorsprung 14 ragt. In jede Durchgangsöffnung 13 ragt ein Hülsenteil 15 einer Dichtplatte 16. Sie hat einen plattenförmigen Grundkörper 17, über dessen beide Seiten der Hülsenteil 15 jeweils gleich weit vorsteht. Mit dem in Fig. 1 nach oben über den Grundkörper 17 vorstehenden Bereich liegt der Hülsenteil 15 über seinen Umfang an der Innenwandung der Durchgangsöffnung 13 an. Der Vorsprung 14 des Führungskörpers 8 ragt in der Stellung gemäß Fig. 1 von oben in den oberen Teil des Hülsenteiles 15 und liegt an dessen Innenwandung über seinen Umfang an.

Die Dichtplatte 16 hat einen umlaufenden Rand 18, mit dem die Dichtplatte an der Innenwand 19 des Unterteiles 2 der Spritzgußform dichtend anliegt.

Die Dichtplatte 16 hat nach unten abstehende, hülsenförmige Abstandhalter 20, mit denen sie auf Vorsprüngen 21 des Unterteiles 2 der Spritzgußform aufgesteckt wird.

Auf diese Weise wird die Dichtplatte 16 im Abstand zum Unterteil 2 gehalten.

Der umlaufende Rand 18 der Dichtplatte 16 ist senkrecht nach oben gerichtet und liegt auch an der Außenwandung 22 des Gehäuses der Steuerungseinrichtung an. Auf diese Weise wird zwischen dem Spritzgußunterteil 2 und dem Gehäuse der Steuerungseinrichtung ein umlaufender Hohlraum 23 gebildet, dessen Dicke der Dicke des Randes 18 entspricht.

Die Anschlußkörper 7 enthalten die (nicht dargestellten) Ansteuerspulen, die mit der Ansteuerelektronik 24 verbunden sind. Sie ist in einem entsprechenden Gehäuse untergebracht, das mit einer Schnittstelle 25 versehen ist.

Der Spritzgußunterteil 2 weist eine der Zahl der Führungskörper 8 bzw. Hülsenteile 15 entsprechende Zahl von Aufnahmehalterungen 26 auf. Sie werden durch Hülsen gebildet, die in Öffnungen 27 des Spritzgußunterteiles 2 gelagert sind. Die Aufnahmehalterungen 26 sind an ihrem dem Spritzgußoberteil 1 zugewandten Ende mit einem umlaufenden Flansch 28 versehen, an dem sich das eine Ende einer Schraubendruckfeder 29 abstützt. Ihr anderes Ende liegt an einem Boden 30 eines im Durchmesser erweiterten Öffnungsbereiches 31 der Öffnung 27 an. Durch die Schraubendruckfeder 29 wird die jeweilige Aufnahmehalterung 26 in Richtung auf den Spritzgußoberteil 1 belastet. Die Aufnahmehalterungen 26 sind im Bereich unterhalb des Spritzgußunterteiles 2 mit einem Sprengring 32 versehen, der in eine umfangsseitige Nut der Aufnahmehalterung 26 eingesetzt ist und als Anschlag dient. Unter der Kraft der jeweiligen Schraubendruckfeder 29 kann somit die entsprechende Aufnahmehalterung 26 nur so weit nach oben in der Öffnung 27 verschoben werden, bis der Sprengring 32 an der Unterseite des Spritzgußunterteiles 2 zur Anlage kommt.

Die Aufnahmehalterungen 26 sind mit einer zentralen axialen Bohrung 33 versehen, die in eine stirnseitige Vertiefung 34 mündet. Sie hat größeren Durchmesser als die Bohrung 33 und nimmt das untere Ende eines Ventilkörpers 35 auf, der in die Vertiefung 34 gesteckt wird.

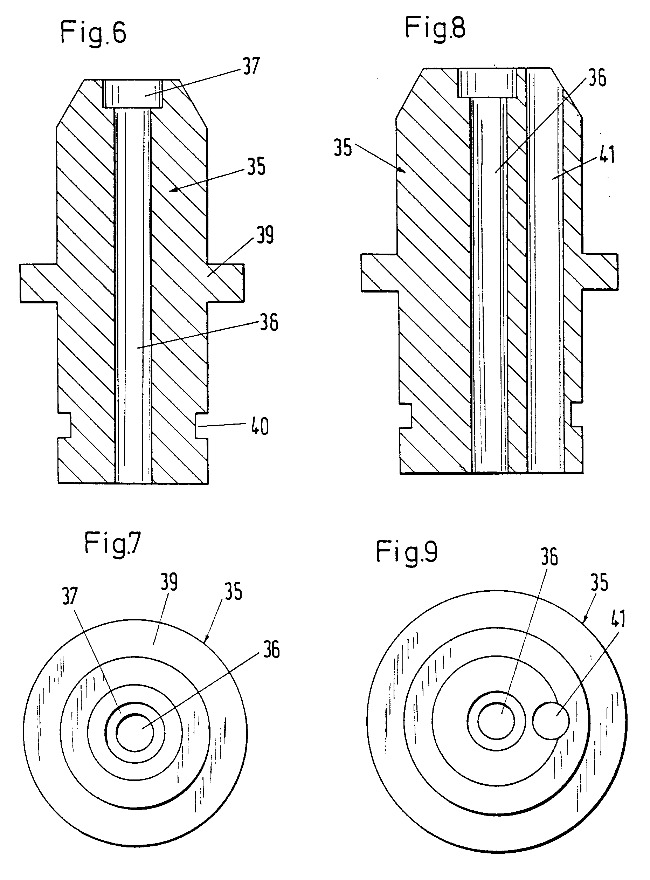

Der Ventilkörper 35 hat, wie die Fig. 6 und 7 zeigen, eine zentrale, axiale Bohrung 36, die während des noch zu beschreibenden Spritzgießvorganges mit der Bohrung 33 der Aufnahmehalterung 26 fluchtet. Im dargestellten Ausführungsbeispiel (Fig. 1) hat die Bohrung 33 der Aufnahmehalterung 26 größeren Durchmesser als die Bohrung 36 des Ventilkörpers 35. Die Bohrung 36 mündet auf der dem Führungskörper 8 zugewandten stirnseitigen Ende in eine Vertiefung 37 (Fig. 6), die größeren Durchmesser als die Bohrung 36 hat. Die Vertiefung 37 nimmt eine Ventilkugel 38 (Fig. 1) auf, an der in montierter Lage der Stößel 10 in bekannter Weise anliegt.

Der Ventilkörper 35 ist etwa in halber Länge mit einem radial nach außen gerichteten umlaufenden Flansch 39 versehen, der als Verankerungsmittel dient, um den Ventilkörper 35 fest in der Vergußmasse zu halten. Nahe dem von der Vertiefung 37 abgewandte Ende ist der Ventilkörper 35 mit einer umlaufenden Ringnut 40 in seiner Mantelfläche versehen, in die ein Dichtring eingelegt werden kann.

Der Ventilkörper 35 hat kreisförmigen Querschnitt und ist an dem die Vertiefung 37 aufweisenden Ende kegelförmig verjüngt ausgebildet. Dadurch läßt sich die Dichtplatte 16 beim noch zu beschreibenden Spritzgießvorgang leicht mit den Hülsenteilen auf die in den Aufnahmehalterungen 26 sitzenden Ventilkörper 35 stecken. Der umlaufende Flansch 39 der Ventilkörper 35 liegt, wie Fig. 1 zeigt, innerhalb der Spritzgußform mit Abstand unterhalb des jeweiligen Hülsenteiles 15 der Dichtplatte 16.

Wie die Fig. 8 und 9 zeigen, kann der Ventilkörper 35 zusätzlich zur zentralen Bohrung 36 eine weitere, parallel verlaufende Bohrung 41 aufweisen. Im übrigen ist der Ventilkörper gemäß den Fig. 8 und 9 gleich ausgebildet wie beim Ausführungsbeispiel gemäß den Fig. 6 und 7.

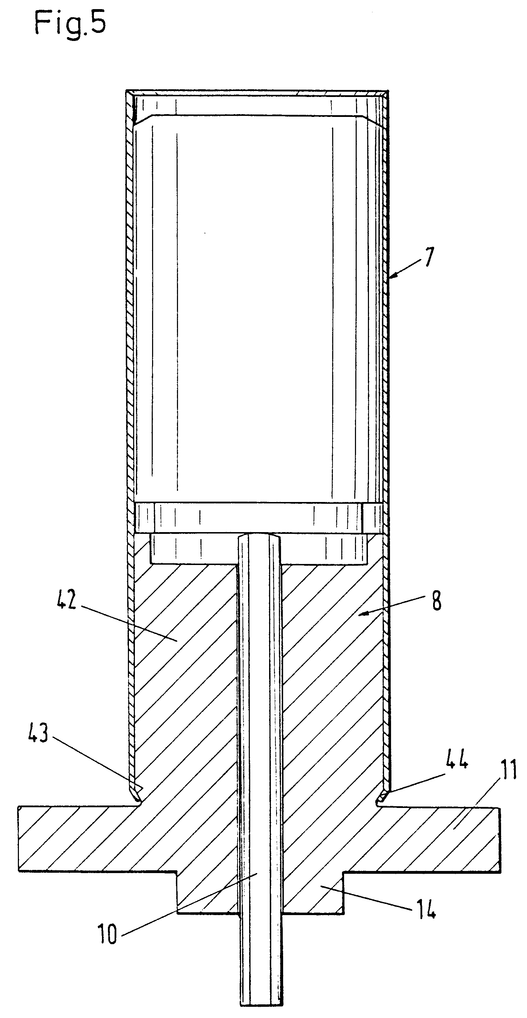

Der Führungskörper 8 hat nahe dem dem Ventilkörper 35 zugewandten Ende den umlaufenden, radial abstehenden Flansch 11 (Fig. 5). Der Vorsprung 14, der auf der dem Ventilkörper 35 zugewandten Seite des Flansches 11 vorgesehen ist, hat kleineren Durchmesser als der auf der gegenüberliegenden Seite des Flansches 11 befindliche Grundkörper 42. Am Übergang vom Grundkörper 42 in den Flansch 11 ist eine umlaufende Einschnürung 43 vorgesehen, in die der Anschlußkörper 7 mit seinem unterem, entsprechend abgewinkeltem Rand 44 eingreift. Dadurch ist eine zuverlässige Axialsicherung gewährleistet, die verhindert, daß der Anschlußkörper 7 vom Führungskörper 8 abgezogen werden kann. Der Anschlußkörper 7 besteht vorteilhaft aus Kunststoff, kann aber auch aus jedem anderen geeigneten Material bestehen. Im Anschlußkörper 8 sind (nicht dargestellte) Ansteuerspulen untergebracht, die durch Bestromen den (nicht dargestellten) Anker axial verschieben, durch welchen der Stößel 10 entsprechend axial verschoben wird. Da eine solche Ausbildung bekannt ist, wird sie auch nicht näher beschrieben.

In der Spritzgußform wird die Ansteuerelektronik 24 zusammen mit den Proportionalmagnetventilen 6 zu einer Einheit vergossen. Zunächst werden die Führungskörper 8 in die Anschlußkörper 7 gesteckt, die ihrerseits auf die nach oben ragenden Teile der Hülsen 15 der Dichtplatte 16 gesteckt werden. Die Führungskörper 8 liegen dann mit ihren Flanschen auf den Hülsenteilen 15 auf (Fig. 1). Die Dichtplatte 16 mit ihren Hülsenteilen 15 verhindert ein Verrutschen der Führungskörper 8 und Anschlußkörper 7. Anschließend werden die Stößel 10 in die Führungskörper 8 gesteckt. Die Teile befinden sich im Spritzgußoberteil 1.

Die Aufnahmehalterungen 26 im Spritzgußunterteil 2 sind unter der Kraft der Schraubendruckfedern 29 so weit nach oben gefahren, bis sie mit den Sprengringen 32 an der Unterseite des Spritzgußunterteiles 2 anliegen. In die Vertiefungen 34 der Aufnahmehalterungen 26 werden die Ventilkörper 35 gesteckt. Die Ventilkugeln 38 werden in die stirnseitigen Vertiefungen 37 der Ventilkörper 35 gelegt und mit Hilfe eines Unterdruckes in Position gehalten. Der Unterdruck wirkt über die Bohrungen 33 und 36.

Nunmehr wird das Spritzgußoberteil 1 nach unten gefahren, wobei die Hülsenteile 15 der Dichtplatte 16 auf die Ventilkörper 35 geschoben werden. Infolge der kegelförmigen Verjüngung der Ventilkörper 35 läßt sich die Dichtplatte 16 mit den Hülsenteilen 15 beim Absenken des Spritzgußoberteiles 1 mühelos auf die Ventilkörper stecken. Hierbei werden die Ventilkörper 35 und damit auch die Aufnahmehalterungen 26 durch die Stößel 10 gegen die Kraft der Schraubendruckfedern 29 so weit nach unten verschoben, bis die Aufnahmehalterungen 26 bzw. die Ventilkörper 35 die erforderliche Lage einnehmen. Diese Ausgangslage der miteinander zu verbindenden Teile in der Spritzgußform ist in Fig. 1 dargestellt. Nunmehr werden die integrierten Spulen bestromt, wobei sich der (nicht dargestellte) Anker, der im Führungskörper 8 untergebracht ist, in bekannter Weise in Richtung auf den Ventilkörper 35 bewegt. Dadurch wird der Stößel 10 gegen die Ventilkugel 38 bewegt. Auf diese Weise wird das Gesamtsystem einwandfrei radial ausgerichtet. Nunmehr wird durch einen geregelten Druck gegen den bestromten Magneten das Gesamtsystem, bestehend aus Anschlußkörper 7, Führungskörper 8, Stößel 10, Dichtplatte 16 und Ventilkörper 35, so weit verschoben, daß der gewünschte Kennlinienpunkt (Öffnungsstrom/Schließstrom) des Proportionalmagnetventiles 6 und damit eine genaue Positionierung des Systems Magnet/Ventilsitz eingestellt wird. Diese Kennlinieneinstellung ist dadurch möglich, daß der Ventilkörper 35 unter der Kraft der Schraubendruckfeder 29 und der Kraft, die durch den geregelten Druck entsteht, steht und sowohl unter deren Kraft als auch gegen diese Kraft in der Spritzgußform im gewünschtem Maße verschoben werden kann. Auf diese Weise werden die einzelnen Proportionalmagnetventile in der Spritzgußform vor dem Spritzguß einwandfrei positioniert und auf die gewünschte Kennlinie bzw. den gewünschten Kennlinienpunkt eingestellt.

Unmittelbar anschließend wird über die Einspritzöffnungen 3 der Kunststoff 45 (Fig. 2) eingespritzt. Die Dichtplatte 16 bildet den oberen Abschluß des Kunststoffes 45, in den die Ventilkörper 35 teilweise eingebettet sind. Die Dichtplatte 16 füllt den Innenquerschnitt des Spritzgußunterteiles 2 aus und dient während des Spritzgußvorganges zur Abdichtung gegen den magnetischen, beweglichen Teil 8, 9, 10. Die Flansche 39 der Ventilkörper 35 bilden Verankerungsmittel, die einen sicheren Halt der Ventilkörper in der Kunststoffmasse 35 gewährleisten. Auch die nach unten über die Dichtplatte 16 ragenden Bereiche der Hülsenteile 15 sind in die Kunststoffmasse 45 eingebettet, so daß auch die Dichtplatte 16 zuverlässig mit der Kunststoffmasse 45 verbunden ist. Der Hohlraum 23 (Fig. 1) wird ebenfalls mit der Kunststoffmasse 45 ausgefüllt. Dieser Teil 46 (Fig. 2) bildet eine innige Verbindung mit dem hochstehenden Rand 18 der Dichtplatte 16. Außerdem bildet er die Verbindung zum oberen Teil des integrierten Ansteuerungssystems, so daß der Magnetteil und der Hydraulikteil des Proportionalmagneten 6 fest miteinander verbunden sind.

Das mit der Kunststoffmasse 45, 46 vergossene System stellt ein integriertes hydraulisches Ansteuersystem für Getriebe dar. Das Ansteuersystem ist für Automatikgetriebe, für Schaltgetriebesteuerungen, für ABS, für CVT und dergleichen hervorragend geeignet. Der besondere Vorteil dieses integrierten hydraulischen Ansteuersystems wird durch die Eliminierung sämtlicher Fertigungstoleranzen erreicht. Durch die beschriebene Bestromung oder die mechanische Beaufschlagung über eine geregelte Kraft vor dem Spritzvorgang wird der Öffnungspunkt/Schließpunkt des jeweiligen Propotionaldruckreglers exakt eingestellt. Auf diese Weise lassen sich sehr kostengünstige Systeme erstellen. Eine doppelte Kontaktierung, d.h. Kabel und Stecker zwischen Elektronik und Hydraulik, ist nicht erforderlich. Da das System in der beschriebenen Weise vor dem Spritzgußvorgang bestromt und mit Gegendruck in die Position der jeweiligen Öffnungspunkte gebracht werden kann, ist eine zusätzliche Prüfung des Gesamtsystems auf Funktion, wie Dichtheit der Ventilsitze, der Ventilkennlinie und dergleichen, nicht notwendig.

Die beschriebene Getriebeansteuerung in der integrierten Bauweise ist mit einem bzw. je einem Ventil pro Gang möglich. Da die Teile der Proportionalmagnetventile 6 noch vor dem Spritzgußvorgang exakt eingestellt werden, ist sichergestellt, daß im integrierten System die Proportionalmagnetventile 6 eine sehr genaue reproduzierbare Druckkennlinie haben.

## Patentansprüche

1. Steuerungseinrichtung, insbesondere für Getriebe von Kraftfahrzeugen, mit einer Steuerungselektronik, an die wenigstens ein Proportionalmagnetventil angeschlossen ist, das einen Magnetteil und einen Ventilteil aufweist,
dadurch gekennzeichnet, daß der Ventilteil (35) wenigstens teilweise in eine Kunststoffmasse (45) eingebettet ist, die den Magnetteil (8, 9) mit dem Ventilteil (35) zusammenhält.

2. Einrichtung nach Anspruch 1,
dadurch gekennzeichnet, daß zwischen dem Magnetteil (8, 9) und dem Ventilteil (35) wenigstens ein Dichtelement (16), vorzugsweise eine Dichtplatte, vorgesehen ist.

3. Einrichtung nach Anspruch 2,
dadurch gekennzeichnet, daß die Kunststoffmasse (45) fest mit dem Dichtelement (16) verbunden ist.

4. Einrichtung nach Anspruch 2 oder 3,
dadurch gekennzeichnet, daß die Kunststoffmasse (45) an die dem Ventilteil (35) zugewandte Seite des Dichtelementes (16) anschließt.

5. Einrichtung nach einem der Ansprüche 2 bis 4,
dadurch gekennzeichnet, daß das Dichtelement (16) Steckteile (15), vorzugsweise Hülsenteile, aufweist, die über beide Seiten des Dichtelementes (16) ragen.

6. Einrichtung nach Anspruch 5,
dadurch gekennzeichnet, daß der Magnetteil (8, 9) auf der einen Seite und der Ventilteil (35) auf der anderen Seite des Dichtelementes (16) in die Steckteile (15) ragen.

7. Einrichtung nach Anspruch 5 oder 6,
dadurch gekennzeichnet, daß die Steckteile (15) zumindest teilweise in die Kunststoffmasse (45) eingebettet sind.

8. Einrichtung nach einem der Ansprüche 1 bis 7,
dadurch gekennzeichnet, daß der Ventilteil (35) mit wenigstens einem Verankerungsteil (39), vorzugsweise einem radial abstehenden Flansch, versehen ist, der in die Kunststoffmasse (45) eingebettet ist.

9. Verfahren zur Herstellung einer Steuerungseinrichtung nach einem der Ansprüche 1 bis 8,
dadurch gekennzeichnet, daß die Steuerungselektronik (24) zusammen mit dem Magnetteil (8, 9) in den einen Teil (1) und der Ventilteil (35) in einen anderen Teil (2) einer Spritzgußform eingesetzt werden, daß die beiden Spritzgußteile (1, 2) so zusammengefahren werden, daß der Magnetteil (8, 9) und der Ventilteil (35) zum Proportionalmagnetventil (6) zusammengefügt sind, und daß anschließend der Magnetteil (8, 9) und der Ventilteil (35) durch Einspritzen einer Kunststoffmasse (45) miteinander verbunden werden.

10. Verfahren nach Anspruch 9,
dadurch gekennzeichnet, daß das Proportionalmagnetventil (6) vor dem Einspritzen der Kunststoffmasse (45) bestromt wird.

11. Verfahren nach Anspruch 9 oder 10,
dadurch gekennzeichnet, daß das Proportionalmagnetventil (6) vor dem Einspritzen der Kunststoffmasse (45) gegen den bestromten Anker so druckbeaufschlagt wird, daß das Proportionalmagnetventil (6) einen vorgegebenen Kennlinienpunkt aufweist.

12. Verfahren nach einem der Ansprüche 9 bis 11,
dadurch gekennzeichnet, daß auf den Magnetteil (8, 9) wenigstens ein Dichtelement (16), vorzugsweise eine Dichtplatte, gesteckt wird.

13. Verfahren nach Anspruch 12,
dadurch gekennzeichnet, daß das Dichtelement (16) beim Zusammenfahren der Spritzgußteile (1, 2) auf den Ventilteil (35) gesteckt wird.
